# EUROPÄISCHE PATENTSCHRIFT

(11) **EP 2 461 053 B1**
(45) Veröffentlichungstag und Bekanntmachung des Hinweises auf die Patenterteilung: **26.06.2013**
(21) Anmeldenummer: 12157550.0
(22) Anmeldetag: 25.09.2008
(51) Int. Cl.: F16C 17/18, F16C 17/04, F16C 17/10, F01D 25/16, F16C 33/10

(54) **Hydrodynamisches Axiallager**
Hydrodynamic axial bearing
Palier axial hydrodynamique

(30) Priorität: 26.09.2007 EP 07117287
(43) Veröffentlichungstag der Anmeldung: 06.06.2012
(62) Teilanmeldung aus: 08804762.6
(73) Patentinhaber: ABB Turbo Systems AG, 5400 Baden (CH)
(72) Erfinder: Ammann, Bruno, 5000 Aarau (CH); Lebong, Markus, 5443 Niederrohrdorf (CH); Di Pietro, Marco, 4665 Oftringen (CH)
(74) Vertreter: ABB Patent Attorneys

(56) Entgegenhaltungen:
- WO-A1-97/41364
- US-A- 3 370 897
- US-A1- 2005 069 232
- US-A1- 2006 140 520

## Beschreibung

### Technisches Gebiet

Die Erfindung bezieht sich auf das Gebiet der hydrodynamischen Axiallagerung von rotierenden Wellen, wie sie etwa in Abgasturboladern eingesetzt werden.

Die Erfindung betrifft eine Schwimmscheibe zur Verwendung in einem hydrodynamischen Axiallager, ein hydrodynamisches Axiallager mit einer derartigen Schwimmscheibe sowie einen Abgasturbolader mit einem derartigen hydrodynamischen Axiallager.

### Stand der Technik

Werden schnell drehende Rotoren mit axialen Schubkräften beaufschlagt, kommen tragfähige Axiallager zum Einsatz. Beispielsweise bei Abgasturboladern werden hydrodynamische Axiallager zur Aufnahme von strömungsbedingt hohen Axialkräften und zur Führung der Turbinenwelle in axialer Richtung eingesetzt. Um bei solchen Anwendungen das Schiefstellungskompensationsvermögen und das Verschleissverhalten zu verbessern, können bei hydrodynamischen Axiallagern zwischen einem mit Wellendrehzahl rotierenden Lagerkamm und einem nicht rotierenden Lagergehäuse frei schwimmende Scheiben, sogenannte Schwimmscheiben, eingesetzt werden.

Beispiele hierzu finden sich unter anderem in GB1095999, EP0840027, EP1199486 und EP1644647. Die radiale Führung der Schwimmscheibe erfolgt entweder auf dem rotierenden Körper, d.h. auf der Welle bzw. auf dem Lagerkamm durch ein in die Schwimmscheibe integriertes Radiallager, wie es beispielsweise in EP0840027 offenbart ist, oder aber auf einem feststehenden, den rotierenden Körper konzentrisch umgebenden Lagerbund, wie es beispielsweise in EP1199486 offenbart ist. Die Schmierung eines solchen hydrodynamischen Axiallagers erfolgt in der Regel mittels Schmieröl aus einem eigenen Schmierölsystem oder bei Abgasturboladern via das Schmierölsystem einer mit dem Abgasturbolader verbundenen Brennkraftmaschine.

Im Betrieb baut sich zwischen der mit nur etwa halber Wellendrehzahl umlaufenden Schwimmscheibe und der Welle bzw. dem auf der Welle angeordneten Lagerkamm ein tragfähiger Schmierfilm auf. Hierfür sind in der Regel auf beiden Seiten der Schwimmscheibe profilierte Kreisringflächen vorgesehen, welche jeweils zusammen mit einer ebenen Gleitfläche den Schmierspalt bilden. Die profilierten Kreisringflächen umfassen zumindest in Umfangsrichtung orientierte Keilflächen, welche zusammen mit den ebenen Gleitflächen einen konvergierenden Spalt bilden. Wird genügend Schmiermittel in diesen konvergierenden Spalt hineingezogen, bildet sich der tragfähige Schmierfilm. In radialer Richtung verbreitet sich das Schmiermittel aufgrund der Fliehkraftwirkung der schnell rotierenden Schwimmscheibe.

### Darstellung der Erfindung

Aufgabe der vorliegenden Erfindung ist es, ein hydrodynamisches Axiallager mit Schwimmscheibe bezüglich Verlustleistung und Öldurchsatz zu optimieren.

Bei einer Schwimmscheibe eines hydrodynamischen Axiallagers müssen beide Seiten mit Schmieröl versorgt werden.

Die gestellte Aufgabe wird durch eine Schwimmscheibe nach Anspruch 1 gelöst.

Dank der Versorgungsbohrung kann auf Versorgungsnuten im Bereich des Radiallagers der Schwimmscheibe weitgehend verzichtet werden. Damit reduziert sich der Schmieröldurchsatz durch den Entkopplungsspalt zwischen dem Lagerkamm 11 und dem Lagerbund 21, welcher vorhanden ist, wenn die Schwimmscheibe 30 auf dem feststehenden Lagergehäuse gelagert ist. Dies ist insbesondere dann von Vorteil, wenn der Entkopplungsspalt im Bereich des Radiallagers der Schwimmscheibe ohne zusätzliches Dichtelement in den Spritzölraum, beispielsweise des Abgasturboladers, führt.

### Kurze Beschreibung der Zeichnungen

Nachfolgend werden Ausführungsformen von hydrodynamischen Axiallagern anhand von Zeichnungen detailliert erläutert. Hierbei zeigt
- Fig. 1: eine erste Ausführungsform eines hydrodynamischen Axialgleitlagers mit einer gestuften Schwimmscheibe,
- Fig. 2: eine zweite Ausführungsform eines hydrodynamischen Axialgleitlagers mit einer Schwimmscheibe mit unterschiedlich profilierten Kreisringflächen, und
- Fig. 3: einen Schnitt durch die Schmierölversorgung eines erfindungsgemäss ausgestalteten hydrodynamischen Axialgleitlagers mit einer gestuften Schwimmscheibe.

### Weg zur Ausführung der Erfindung

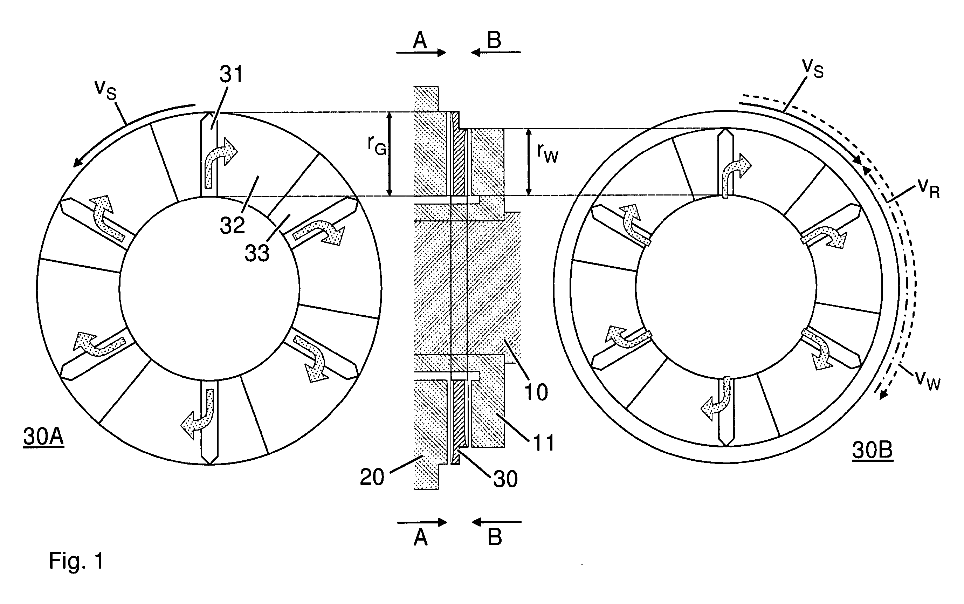

Fig. 1 zeigt ein hydrodynamisches Axiallager, wobei in der Mitte der Figur ein entlang der Wellenachse geführter Schnitt durch das Axiallager dargestellt ist. Das Axiallager umfasst eine Schwimmscheibe 30, welche axial zwischen dem Lagergehäuse 20 und dem auf der Welle 10 angeordneten und mit der Welle rotierenden Lagerkamm 11 angeordnet ist. Der Lagerkamm kann optional als radial abstehender Fortsatz in die Welle integriert sein, so dass die Schwimmscheibe axial zwischen Lagergehäuse und Wellenfortsatz angeordnet ist. Im linken und rechten Bereich der Figur ist eine Ansicht auf die Schwimmscheibe von der jeweiligen Seite her betrachtet dargestellt. Auf der linken Seite ist die in Richtung A betrachtete Schwimmscheibe 30A, auf der rechten Seite die in Richtung B betrachtete Schwimmscheibe 30B dargestellt. Die dem Lagergehäuse zugewandte profilierte Kreisringfläche der Schwimmscheibe 30A rotiert mit der absoluten Geschwindigkeit v_{S}, in der dargestellten Ausführungsform in Richtung A betrachtet also im Gegenuhrzeigersinn. Dabei wird das über Schmiernuten 31 radial in den Bereich der profilierten Kreisringfläche der Schwimmscheibe zwischen der Schwimmscheibe 30 und dem Lagergehäuse 20 eingebrachte Schmieröl, wie mit den breiten Pfeilen angedeutet, entgegen der Drehrichtung der Schwimmscheibe in die Keilflächen 32 hineingezogen. Durch die Verengung des Schmierspalts zwischen den Keilflächen 32 und der gegenüberliegenden ebenen Gleitfläche am Lagergehäuse wird der für die Tragfähigkeit des Axiallagers benötigte Druck aufgebaut. Der grösste Druck ergibt sich im Bereich des Übergangs von der Keilfläche 32 zur Rastfläche 33.

Die dem Lagerkamm zugewandte profilierte Kreisringfläche der Schwimmscheibe 30B rotiert mit der absoluten Geschwindigkeit v_{S}, in der dargestellten Ausführungsform in Richtung B betrachtet also im Uhrzeigersinn. Da der Lagerkamm 11 allerdings mit mehr als doppelt so grosser Geschwindigkeit v_{W} in die gleiche Richtung rotiert, ergibt sich eine Relativgeschwindigkeit der profilierten Kreisringfläche v_{R}, welche in Richtung B betrachtet im Gegenuhrzeigersinn verläuft. Die Relativgeschwindigkeit v_{R} ist dabei grösser als die absolute Geschwindigkeit v_{S}. Wiederum ist mit den breiten Pfeilen angedeutet, wie das Schmieröl über die Schmiernuten radial nach aussen geführt und dabei in Umfangsrichtung in die Keilflächen hineingezogen wird.

Bei der Ausführungsform nach Fig. 1 weist die Schwimmscheibe 30 eine radiale Abstufung auf, so dass die dem Lagergehäuse 20 zugewandte Seite die dem Lagerkamm 11 zugewandte Seite in radialer Richtung überragt. Die radialen Ausdehnungen der beiden Seiten der Schwimmscheibe sind somit unterschiedlich. Die profilierte Kreisringfläche auf der dem Lagergehäuse zugewandten Seite weist eine Ringbreite r_{G} auf, welche grösser ist als die Ringbreite r_{W} der Kreisringfläche auf der dem Lagerkamm zugewandten Seite der Schwimmscheibe.

Aufgrund der höheren relativen Geschwindigkeit, mit welcher die Keilflächen der profilierten Kreisringfläche auf der dem Lagerkamm zugewandten Seite der Schwimmscheibe entlang der ebenen Gleitfläche auf dem Lagerkamm rotieren, stellt sich trotz der kleineren tragenden Fläche ein Schmierspalt ein, welcher demjenigen zwischen dem Lagergehäuse und der dem Lagergehäuse zugewandten Seite der Schwimmscheibe entspricht.

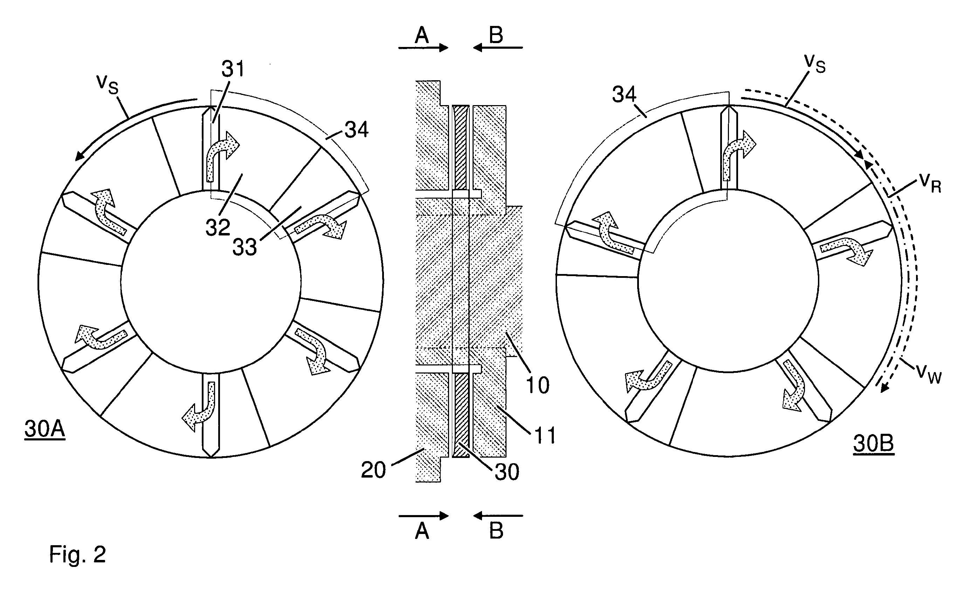

Bei der Ausführungsform nach Fig. 2 weist die Schwimmscheibe 30 zwei gleich grosse Seiten auf, deren profilierte Kreisringflächen jedoch unterschiedlich ausgebildet sind. Die profilierte Kreisringfläche ist in mehrere Segmente 34 unterteilt, wobei ein Segment eine Schmiernut 31, eine Keilfläche 32 und eine angrenzende Rastfläche 33 umfasst. Die gegenüber dem feststehenden Lagergehäuse langsamer rotierende Kreisringfläche auf der linken Seite weist eine höhere Anzahl von Segmenten 34 auf als die mit einer höheren Relativgeschwindigkeit rotierende Kreisringfläche auf der dem Lagerkamm zugewandten Seite.

Optional kann die Tragfähigkeit variiert werden, wenn etwa der Steigungswinkel der Keilfläche geändert und dadurch der Bereich mit der grössten Tragkraft verkleinert oder ausgedehnt wird. Der Übergang zwischen der Keilfläche 32 und der Rastfläche 33 kann mittels einer Kante oder als eine kontinuierlich verlaufende, kantenlose Fläche realisiert sein. In letzterem Fall braucht nicht zwischen Keil- und Rastfläche unterschieden werden, so kann etwa die Keilfläche auch bis hin zur nächsten Schmiernut kontinuierlich mit einem stetig kleiner werdenden Winkel ansteigen.

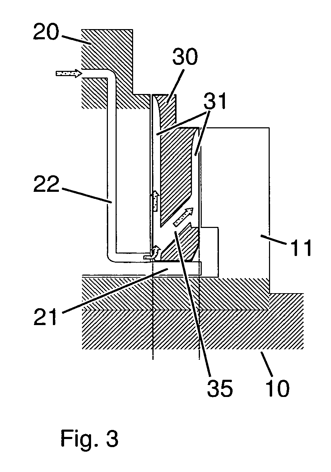

Das Axiallager nach Fig. 3 umfasst wiederum eine Schwimmscheibe 30, welche axial zwischen dem Lagergehäuse 20 und dem auf der Welle 10 angeordneten und mit der Welle rotierenden Lagerkamm 11 angeordnet ist. Der Lagerkamm kann optional als radial abstehender Fortsatz in die Welle integriert sein, so dass die Schwimmscheibe axial zwischen Lagergehäuse und Wellenfortsatz angeordnet ist.

Bei einer Schwimmscheibe eines hydrodynamischen Axiallagers müssen beide Seiten mit Schmieröl versorgt werden. Hierfür wird erfindungsgemäss mindestens eine Versorgungsbohrung 35 in die Schwimmscheibe eingelassen. Die Versorgungsbohrung 35 verbindet die beiden Seiten der Schwimmscheibe und erlaubt die Zufuhr von Schmieröl von einer Seite auf die andere. Optional weist die Schwimmscheibe für jede Schmiernut auf der dem Lagerkamm zugewandten Seite eine Versorgungsbohrung auf. In der dargestellten Ausführungsform wird das Schmieröl über eine Schmierölzuleitung 22 im Lagergehäuse in den Bereich des Schmierspalts zwischen der Schwimmscheibe 30 und dem Lagergehäuse 20 geführt. Durch die Rotation der profilierten Kreisringfläche wird das Schmieröl entlang der Schmiernuten 31 radial nach aussen gefördert und dabei in Umfangsrichtung in die Keilflächen hineingezogen. Über die im Bereich der Schmiernuten 31 angeordneten Versorgungsbohrungen 35, wird das Schmieröl auch in den Bereich des Schmierspalts zwischen der Schwimmscheibe 30 und dem Lagerkamm 11 gefördert. Die Versorgungsbohrungen sind erfindungsgemäß dabei ausgehend von dem Schmierspalt mit der Schmierölzuführung von der Achsrichtung abweichend in einem Winkel zum äusseren Rand hin gerichtet, sodaß der Schmierölfluss durch die Rotation der Schwimmscheibe unterstützt wird.

Dank der Versorgungsbohrung kann auf Versorgungsnuten im Bereich des Radiallagers der Schwimmscheibe weitgehend verzichtet werden. Damit reduziert sich der Schmieröldurchsatz durch den Entkopplungsspalt zwischen dem Lagerkamm 11 und dem Lagerbund 21, welcher vorhanden ist, wenn die Schwimmscheibe 30 auf dem feststehenden Lagergehäuse gelagert ist. Dies ist insbesondere dann von Vorteil, wenn der Entkopplungsspalt im Bereich des Radiallagers der Schwimmscheibe ohne zusätzliches Dichtelement in den Spritzölraum, beispielsweise des Abgasturboladers, führt.

### Bezugszeichenliste

- 10: Welle
- 11: Lagerkamm
- 20: Lagergehäuse
- 21: Lagerbund
- 22: Schmierölzuleitung
- 30: Schwimmscheibe
- 30A: Schwimmscheibe Seite Lagergehäuse (in Richtung A betrachtet)
- 30B: Schwimmscheibe Seite Lagerkamm (in Richtung B betrachtet)
- 31: Schmiernut
- 32: Keilfläche
- 33: Rastfläche
- 35: Versorgungsbohrung
- r_{G}: Ringbreite auf Seite des Lagergehäuses
- r_{W}: Ringbreite auf Seite des Lagerkamms
- v_{R}: Relativgeschwindigkeit der Schwimmscheibe bezüglich des Lagerkamms
- v_{S}: Geschwindigkeit der Schwimmscheibe
- v_{W}: Geschwindigkeit des Lagerkamms

## Patentansprüche

1. Schwimmscheibe zur Verwendung in einem hydrodynamischen Axiallager mit einer drehbar in einem Lagergehäuse (20) gelagerten Welle (10), einem Lagergehäuse (20) und einem Lagerkamm (11), wobei die Schwimmscheibe axial zwischen dem Lagergehäuse und dem auf der Welle angeordneten Lagerkamm (11) angeordnet werden kann zur Ausbildung jeweils eines durch eine profilierte Kreisringfläche und eine ebene Gleitfläche begrenzten Schmierspaltes zwischen dem Lagergehäuse (20) und der Schwimmscheibe (30) und der Schwimmscheibe (30) und dem Lagerkamm (11), wobei die Schwimmscheibe zwei profilierte Kreisringflächen (30A, 30B) aufweist, die mehrere, den Schmierspalt jeweils in Umfangsrichtung verengende Keilflächen (32) sowie radiale Schmiernuten (31) umfassen, **dadurch gekennzeichnet, dass** in die Schwimmscheibe (30) mindestens eine Versorgungsbohrung (35) eingelassen ist, die beide Seiten der Schwimmscheibe miteinander verbindet, die zumindest auf einer Seite der Schwimmscheibe in eine Schmiernut (31) mündet, und die in einem Winkel zur Achsrichtung radial nach aussen gerichtet ist.

2. Schwimmscheibe nach Anspruch 1, wobei die beiden den Schmierspalt beidseits der Schwimmscheibe (30) bildenden, profilierten Kreisringflächen jeweils in eine unterschiedliche Anzahl Segmente (34) unterteilt sind, wobei ein Segment (34) jeweils eine Keilfläche (32) umfasst.

3. Schwimmscheibe nach Anspruch 1 oder 2, wobei die beiden den Schmierspalt beidseits der Schwimmscheibe bildenden, profilierten Kreisringflächen unterschiedlich ausgebildete Keilflächen (32) aufweisen.

4. Schwimmscheibe nach einem der Ansprüche 1 bis 3 wobei eine Seite der Schwimmscheibe (30) gegenüber der anderen Seite radial abgestuft ausgebildet ist.

5. Schwimmscheibe nach einem der Ansprüche 1 bis 4, wobei für jede Schmiernut auf der dem Lagerkamm zugewandten Seite eine Versorgungsbohrung (35) vorgesehen ist.

6. Hydrodynamisches Axiallager einer drehbar in einem Lagergehäuse (20) gelagerten Welle (10), umfassend eine Schwimmscheibe nach einem der Ansprüche 1 bis 5,
- welche axial zwischen dem Lagergehäuse und einem auf der Welle angeordneten Lagerkamm (11) angeordnet ist,
- wobei zwischen dem Lagergehäuse (20) und der Schwimmscheibe (30) und der Schwimmscheibe (30) und dem Lagerkamm (11) jeweils ein durch eine profilierte Kreisringfläche und eine ebene Gleitfläche begrenzter Schmierspalt ausgebildet ist,
- wobei die profilierten Kreisringflächen mehrere, den Schmierspalt jeweils in Umfangsrichtung verengende Keilflächen (32) umfassen, und
- wobei die Schwimmscheibe radiale Schmiernuten (31) aufweist,
**dadurch gekennzeichnet, dass** in die Schwimmscheibe (30) mindestens eine Versorgungsbohrung (35) eingelassen ist, die beide Seiten der Schwimmscheibe miteinander verbindet, die zumindest auf einer Seite der Schwimmscheibe in eine Schmiernut (31) mündet, und die in einem Winkel zur Achsrichtung radial nach aussen gerichtet sind.

7. Hydrodynamisches Axiallager nach Anspruch 6, wobei die beiden den Schmierspalt beidseits der Schwimmscheibe (30) bildenden, profilierten Kreisringflächen jeweils in eine unterschiedliche Anzahl Segmente (34) unterteilt sind, wobei ein Segment (34) jeweils eine Keilfläche (32) umfasst.

8. Hydrodynamisches Axiallager nach Anspruch 6, wobei die beiden den Schmierspalt beidseits der Schwimmscheibe bildenden, profilierten Kreisringflächen unterschiedlich ausgebildete Keilflächen (32) aufweisen.

9. Hydrodynamisches Axiallager nach einem der Ansprüche 6 bis 8, wobei eine Seite der Schwimmscheibe (30) gegenüber der anderen Seite radial abgestuft ausgebildet ist.

10. Hydrodynamisches Axiallager nach einem der Ansprüche 6 bis 8, wobei für jede Schmiernut auf der dem Lagerkamm zugewandten Seite eine Versorgungsbohrung (35) vorgesehen ist.

11. Abgasturbolader, umfassend eine Welle mit einem hydrodynamischen Axiallager nach einem der Ansprüche 6 bis 10.

## Claims

1. Floating disk for use in a hydrodynamic axial bearing having a shaft (10) which is mounted such that it can rotate in a bearing housing (20), a bearing housing (20) and a bearing comb (11), wherein the floating disc can be arranged axially between the bearing housing and the bearing comb (11) arranged on the shaft in order to form a respective lubricating gap, which is bounded by a profiled annular surface and a smooth sliding surface, between the bearing housing (20) and the floating disc (30), and the floating disc (30) and the bearing comb (11), wherein the floating disc has two profiled annular surfaces (30A, 30B) comprising a plurality of wedge surfaces (32), which each narrow the lubricating gap in the circumferential direction, and radial lubricating grooves (31), **characterized in that** at least one supply hole (35) is incorporated in the floating disk (30), which at least one supply hole connects the two sides of the floating disk to one another, which at least one supply hole opens into a lubricating groove (31) at least on one side of the floating disk and which at least one supply hole is directed at an angle with respect to the axial direction radially outward.

2. Floating disk according to Claim 1, wherein the two profiled annular surfaces which form the lubricating gap on both sides of the floating disk (30) are each subdivided into a different number of segments (34), wherein one segment (34) in each case comprises one wedge surface (32).

3. Floating disk according to Claim 1 or 2, wherein the two profiled annular surfaces which form the lubricating gap on both sides of the floating disk have wedge surfaces (32) of different design.

4. Floating disk according to one of Claims 1 to 3, wherein one side of the floating disk (30) is radially stepped with respect to the other side.

5. Floating disk according to one of Claims 1 to 4, wherein a supply hole (35) is provided for each lubricating groove on the side facing the bearing comb.

6. Hydrodynamic axial bearing for a shaft (10) which is mounted such that it can rotate in a bearing housing (20), comprising a floating disk according to one of Claims 1 to 5,
- which is arranged axially between the bearing housing and a bearing comb (11) which is arranged on the shaft,
- wherein a lubricating gap, which is bounded by a profiled annular surface and a smooth sliding surface is in each case formed between the bearing housing (20) and the floating disk (30), and the floating disk (30) and the bearing comb (11),
- wherein the profiled annular surfaces comprise a plurality of wedge surfaces (32) which each narrow the lubricating gap in the circumferential direction, and
- wherein the floating disk has radial lubricating grooves (31),
**characterized in that** at least one supply hole (35) is incorporated in the floating disk (30), which at least one supply hole connects the two sides of the floating disk to one another, which at least one supply hole opens into a lubricating groove (31) at least on one side of the floating disk and which at least one supply hole is directed at an angle with respect to the axial direction radially outward.

7. Hydrodynamic axial bearing according to Claim 6, wherein the two profiled annular surfaces which form the lubricating gap on both sides of the floating disk (30) are each subdivided into a different number of segments (34), wherein one segment (34) in each case comprises one wedge surface (32).

8. Hydrodynamic axial bearing according to Claim 6, wherein the two profiled annular surfaces which form the lubricating gap on both sides of the floating disk have wedge surfaces (32) of different design.

9. Hydrodynamic axial bearing according to one of Claims 6 to 8, wherein one side of the floating disk (30) is radially stepped with respect to the other side.

10. Hydrodynamic axial bearing according to one of Claims 6 to 8, wherein a supply hole (35) is provided for each lubricating groove on the side facing the bearing comb.

11. Exhaust-gas turbocharger, comprising a shaft with a hydrodynamic axial bearing according to one of Claims 6 to 10.

## Revendications

1. Disque flottant pour l'utilisation dans un palier axial hydrodynamique avec un arbre (10) monté à rotation dans un boîtier de palier (20), un boîtier de palier (20) et une coiffe de palier (11), le disque flottant pouvant être disposé axialement entre le boîtier de palier et la coiffe de palier (11) disposée sur l'arbre en vue de réaliser à chaque fois une fente de lubrification limitée par une surface de bague circulaire profilée et une surface de glissement plane entre le boîtier de palier (20) et le disque flottant (30) et entre le disque flottant (30) et la coiffe de palier (11), le disque flottant présentant deux surfaces de bague circulaire profilées (30A, 30B), qui comprennent plusieurs surfaces de clavette (32) rétrécissant la fente de lubrification à chaque fois dans la direction périphérique ainsi que des rainures de lubrification radiales (31), **caractérisé en ce qu'**au moins un alésage d'alimentation (35) est pratiqué dans le disque flottant (30), l'alésage d'alimentation reliant entre eux les deux côtés du disque flottant, l'alésage d'alimentation débouchant au moins d'un côté du disque flottant dans une rainure de lubrification (31) et étant orienté radialement vers l'extérieur suivant un certain angle par rapport au sens axial.

2. Disque flottant selon la revendication 1, dans lequel les deux surfaces de bague circulaire profilées formant la fente de lubrification de chaque côté du disque flottant (30) sont divisées à chaque fois en un nombre différent de segments (34), un segment (34) comprenant à chaque fois une surface de clavette (32).

3. Disque flottant selon la revendication 1 ou 2, dans lequel les deux surfaces de bague circulaire profilées formant la fente de lubrification de chaque côté du disque flottant présentent des surfaces de clavette (32) réalisées différemment.

4. Disque flottant selon l'une quelconque des revendications 1 à 3, dans lequel un côté du disque flottant (30) est réalisé de manière étagée radialement par rapport à l'autre côté.

5. Disque flottant selon l'une quelconque des revendications 1 à 4, dans lequel un alésage d'alimentation (35) est prévu pour chaque rainure de lubrification sur le côté tourné vers la coiffe de palier.

6. Palier axial hydrodynamique d'un arbre (10) monté à rotation dans un boîtier de palier (20), comprenant un disque flottant selon l'une quelconque des revendications 1 à 5,
- qui est disposé axialement entre le boîtier de palier et une coiffe de palier (11) disposée sur l'arbre,
- une fente de lubrification limitée à chaque fois par une surface de bague circulaire profilée et une surface de glissement plane étant réalisée entre le boîtier de palier (20) et le disque flottant (30) et entre le disque flottant (30) et la coiffe de palier (11),
- les surfaces de bague circulaire profilées comprenant plusieurs surfaces de clavette (32) rétrécissant la fente de lubrification à chaque fois dans la direction périphérique
- le disque flottant présentant des rainures de lubrification radiales (31),
- **caractérisé en ce qu'**au moins un alésage d'alimentation (35) est pratiqué dans le disque flottant (30), l'alésage reliant entre eux les deux côtés du disque flottant, l'alésage d' alimentation débouchant au moins d'un côté du disque flottant dans une rainure de lubrification (31) et étant orienté radialement vers l'extérieur suivant un certain angle par rapport au sens axial.

7. Palier axial hydrodynamique selon la revendication 6, dans lequel les deux surfaces de bague circulaire profilées formant la fente de lubrification de chaque côté du disque flottant (30) sont divisées à chaque fois en un nombre différent de segments (34), un segment (34) comprenant à chaque fois une surface de clavette (32).

8. Palier axial hydrodynamique selon la revendication 6, dans lequel les deux surfaces de bague circulaire profilées formant la fente de lubrification de chaque côté du disque flottant présentent des surfaces de clavette (32) réalisées différemment.

9. Palier axial hydrodynamique selon l'une quelconque des revendications 6 à 8, dans lequel un côté du disque flottant (30) est réalisé de manière étagée radialement par rapport à l'autre côté.

10. Palier axial hydrodynamique selon l'une quelconque des revendications 6 à 8, dans lequel un alésage d'alimentation (35) est prévu pour chaque rainure de lubrification sur le côté tourné vers la coiffe de palier.

11. Turbosoufflante à gaz d'échappement comprenant un arbre avec un palier axial hydrodynamique selon l'une quelconque des revendications 6 à 10.
